# EUROPÄISCHE PATENTSCHRIFT

(11) **EP 1 110 765 B1**
(45) Veröffentlichungstag und Bekanntmachung des Hinweises auf die Patenterteilung: **13.10.2004**
(21) Anmeldenummer: 00122399.9
(22) Anmeldetag: 26.10.2000
(51) Int. Cl.: B60C 25/00, B60S 5/04

(54) **Reifenfüllstation zum Füllen eines Rades mit Druckluft sowie Verfahren hierfür**
Tyre inflation device to fill a tyre with compressed air and method therefor
Système de gonflage de pneumatiques pour gonfler un pneumatique avec de l'air comprimé et méthode pour ceçi

(30) Priorität: 20.12.1999 DE 19961468
(43) Veröffentlichungstag der Anmeldung: 27.06.2001
(73) Patentinhaber: Hofmann Maschinen- und Anlagenbau GmbH, 67550 Worms (DE)
(72) Erfinder: Hornung, Volker, Dr.-Ing., 41366 Schwalmtal (DE); Wattendorf, Günther, 64625 Bensheim (DE)
(74) Vertreter: Nöth, Heinz, Dipl.-Phys.

(56) Entgegenhaltungen:
- DE-A- 1 906 917
- DE-A- 19 801 455
- US-A- 2 900 015

## Beschreibung

Die Erfindung betrifft eine Reifenfüllstation zum Füllen eines Rades mit Druckluft sowie ein Verfahren hierfür gemäß den Oberbegriffen der Ansprüche 1 und 14.

Derartige Reifenfüllstationen zum Füllen eines Rades sowie die zugehörigen Verfahren werden vor allen Dingen bei der industriellen Endmontage von Kraftfahrzeugen, Motorrädern oder Lastkraftwagen verwendet. Die Reifenfüllstationen sind hierbei Teil einer Fertigungsstraße, bei der sich in Zuführrichtung des Rades stromaufwärts von der Reifenfüllstation eine Aufziehstation befindet, in der ein Reifen auf das Scheibenrad automatisch aufgezogen wird. Anschließend wird das Rad, welches aus dem Scheibenrad und dem auf das Scheibenrad aufgezogenen Reifen besteht, mittels einer Vorrichtung in die Reifenfüllstation gefördert.

Eine solche Reifenfüllstation geht aus dem US-Patent 2,900,015 hervor, das den nächstkommenden Stand der Technik bildet, von dem die vorliegende Erfindung ausgeht Hierbei wird das von der Aufziehstation kommende Rad zunächst auf einer Radauflage abgelegt und dort ausgerichtet bzw. zentriert. Oberhalb des Rades weist die Reifenfüllstation eine im wesentlichen koaxial zu der Radachse angeordnete sowie reversibel verfahrbare Füllglocke auf. Die Füllglocke ist über eine entsprechende Leitung mit einer Druckluftquelle verbunden.

Zum Füllen eines Rades wird die Füllglocke in einem ersten Schritt aus ihrer Außerbetriebsstellung in Richtung der Reifenflanke verfahren und gelangt in Kontakt mit der Reifenflanke. Bei einem weiteren Verfahren der Füllglocke wird die obere Reifenflanke, insbesondere deren Reifenwulst von dem Felgenhorn abgehoben und in Richtung des Felgeninneren verschoben, so dass sich ein Spalt zwischen dem Felgenhorn und der Reifenflanke ausbildet. Gleichzeitig hiermit setzt ein im Inneren der Füllglocke angeordneter Dichtringteller auf dem Felgenhorn auf, so dass ein geschlossener Raum entsteht, der aus dem Reifeninneren und dem Inneren der Füllglocke besteht. Die Abdichtung nach außen erfolgt über die auf der Reifenflanke aufsitzende Randkante der Füllglocke, den auf der Felge aufsitzenden Dichtringteller und den in dem Felgenhorn sitzenden Reifenwulst der unteren Reifenflanke. Anschließend wird die Druckluft in das Reifeninnere geführt. Die Druckluft bewirkt zunächst, dass sich der untere Reifenwulst, sofern dies nicht bereits geschehen ist, in das Felgenhorn setzt. Anschließend drückt die in das Reifeninnere strömende Luft den oberen Reifenwulst nach oben. Zu diesem Zeitpunkt fährt die Füllglocke wiederum vertikal nach oben, damit der obere Reifenwulst in den Sitz des oberen Felgenhorns gleiten kann.

Bei diesen bekannten Reifenfüllstationen hat es sich als nachteilig erwiesen, dass sich zwar der Setzvorgang des oberen Reifenwulstes mittels der sich zurückziehenden Füllglocke und der eintretenden Druckluft gesteuert durchführen lässt, so dass dessen Sitz optimal ist, jedoch für den unteren Reifenwulst keine Möglichkeit besteht, dessen Sitzverhalten zu beeinflussen. Dies wird auch durch Messungen aus der Praxis bestätigt, aus denen hervorgeht, dass der untere Reifensitz immer schlechter ist als der obere.

Darüber hinaus besteht ein Problem bei den bekannten Reifenfüllstationen darin, dass von einer einwandfreien Dichtung mittels des Dichtringtellers am oberen Felgenhorn ausgegangen wird. Heutzutage finden sich aber Felgen, die so gestaltet sind, dass der Dichtringteller nicht oder nur unzulänglich abdichten kann, da sich an der Oberkante der Felge beispielsweise noch Speichen befinden, die keine dichte Auflage des Dichtringtellers erlauben. Hiermit lässt sich aber der Füllraum nicht hermetisch abdichten, so dass das Rad nicht den gewünschten Luftdruck aufweist.

Weiterhin geht aus der deutschen Offenlegungsschrift 19 06 917 eine Reifenfüllstation hervor, bei der eine erste und eine zweite Füllglocke, die mit zueinander weisenden Glockenöffnungen vertikal übereinander angeordnet sind, vorgesehen ist. Ein zu befüllender Reifen wird auf die untere Füllglocke aufgelegt und diese dann vertikal nach oben verfahren, bis die obere Flanke des Reifens gegen die Öffnung der oberen Füllglocke anliegt.

Schließlich geht aus der deutschen Offenlegungsschrift 198 01 455 eine Reifenfüllstation mit einer Füllglocke hervor, bei der mehrere Reifen-Dichtringe in der Füllglocke vorhanden sind, welche je nach Reifengröße automatisch zum Einsatz gelangen.

Es ist Aufgabe der vorliegenden Erfindung, eine Reifenfüllstation sowie ein Füllverfahren der eingangs genannten Art zu schaffen, die unabhängig von der Felgengestaltung einen optimalen Sitz der Reifenwülste beider Reifenflanken sicher stellen.

Hinsichtlich der Reifenfüllstation wird die vorstehende Aufgäbe durch die Merkmale des Anspruchs 1 gelöst. In den sich daran anschließenden Ansprüchen 2 bis 13 finden sich vorteilhafte Ausgestaltungen hierzu.

Durch das Vorsehen der zweiten Füllglocke, die unterhalb des zu füllenden Reifens angeordnet sein kann, wenn die erste Füllglocke oberhalb des Reifens vorgesehen ist, kann die zweite Reifenflanke ebenfalls abgedrückt und gesteuert in ihren Sitz im Felgenhorn zurück geführt werden. Hierdurch ist sichergestellt, dass diese Reifenflanke ebenfalls einen optimalen Sitz einnimmt und deren Sitz nicht, wie dies beim Stand der Technik der Fall ist, von dem Zufall abhängt. Da nunmehr kein Dichtringteller auf die Felge aufgesetzt werden muss, dessen Funktionsfähigkeit von der Gestaltung der Felge abhängt, kann die erfindungsgemäße Reifenfüllstation für jede Felgenform eingesetzt werden. Der Füllraum wird dann durch die jeweils dicht auf den Reifenflanken aufsitzenden Füllglocken, dem Reifen und der Felge gebildet.

Dabei ist vorgesehen dass die erste und die zweite Füllglocke zum Abdrücken der Reifenflanken in Achsrichtung des Rades aufeinander zu reversibel verfahrbar sind. In diesem Zusammenhang ist zu bemerken, dass die Verfahrbewegung der beiden Füllglocken sowohl gleichzeitig als auch zeitlich hintereinander erfolgen kann. Im letzteren Fall wäre beispielsweise denkbar, dass die erste Füllglocke soweit verfahren wird, dass sie auf der ersten Reifenflanke aufsetzt und erst anschließend die zweite Füllglocke in Richtung der zweiten Reifenflanke verfahren wird.

Grundsätzlich kann vorgesehen sein, dass die zweite Füllglocke lediglich die zweite Reifenflanke von dem Felgenhorn abdrückt. Beim Aufsetzen der ersten Füllglocke auf die erste Reifenflanke entsteht dann ein nach außen hin luftdichter Raum, der durch die erste Füllglocke, das Reifeninnere mit Felge und die zweite Füllglocke gebildet ist. Anschließend kann über die erste Füllglocke Druckluft in das Reifeninnere geführt werden. Um aber die Füllzeiten zu verkürzen, ist es vorteilhaft, wenn die zweite Füllglocke ebenfalls zum Zuführen von Füllluft in das Reifeninnere in der Lage ist.

Um die Bewegung der beiden Füllglocken zu steuern, insbesondere miteinander koordinieren zu können, kann es weiterhin von Vorteil sein, wenn für die erste und/oder die zweite Füllglocke wenigstens eine Messeinrichtung zum Erfassen des von der jeweiligen Füllglocke zurückgelegten Weges vorgesehen ist.

Um den Arbeitsvorgang der Reifenfüllstation steuern zu können, hat es sich weiterhin als vorteilhaft erwiesen, wenn eine vorzugsweise programmierbare Steuereinrichtung zum Steuern zumindest der Verfahrbewegung der ersten und/oder der zweiten Füllglocke vorgesehen ist. Die Steuerung der ersten und/oder zweiten Füllglocke kann dabei unter Berücksichtigung der Radauflagenhöhe und der Einpresstiefe der Felge bzw. des Scheibenrades erfolgen.

Um die Felge der Radscheibe stabil auf der vorzugsweise planen Auflage zu halten, kann es weiterhin von Vorteil sein, wenn eine zweite Zentriereinrichtung zum Zentrieren der Felgenbohrung vorgesehen ist, die darüber hinaus auch als Spanneinrichtung dienen kann.

Wie bereits vorstehend erwähnt worden ist, kann in Zuführrichtung vor der Reifenfüllstation eine Aufziehstation zum Aufziehen eines Reifens auf die Radscheibe vorgesehen sein. Darüber hinaus kann aber auch eine Einrichtung zum Messen der Maultiefe der Felge und/oder der Einpresstiefe des Scheibenrades vorgesehen sein.

Die Betätigung der beiden Füllglocken kann mittels Elektromotoren erfolgen. Da jedoch zum Füllen der Reifen wenigstens eine Druckluftquelle vorgesehen sein muss, hat es sich als vorteilhaft erwiesen, wenn die beiden Füllglocken mittels vorzugsweise pneumatischer Betätigungszylinder verfahrbar sind.

Um verschiedene Räder mit unterschiedlichen Durchmessern ohne Umrüsten der Reifenfüllstation befüllen zu können, hat es sich weiterhin als vorteilhaft erwiesen, wenn die erste Füllglocke und/oder die zweite Füllglocke wenigstens zwei koaxial zueinander angeordnete, einzelne erste und/oder zweite Füllglocken bzw. zwei erste und/oder zweite Einzelfüllglocken aufweisen. Jede der Einzelfüllglocken ist für einen bestimmten Durchmesserbereich vorgesehen und kann dann wahlweise eingesetzt werden. Je nach Größe des Durchmesserbereiches können auch mehr als zwei Einzelfüllglocken koaxial zueinander angeordnet sein.

Damit die Auswahl der jeweiligen Einzelfüllglocke an den Raddurchmesser auf einfache Weise erfolgen kann, ist es von Vorteil, wenn die wenigstens zwei ersten Einzelfüllglocken und/oder die wenigstens zwei zweiten Einzelfüllglocken getrennt voneinander axial reversibel verfahrbar sind. Dies kann dadurch erfolgen, dass die wenigstens zwei ersten Einzelfüllglocken und/oder die wenigstens zwei zweiten Einzelfüllglocken mittels eines Drehgetriebes sowie einer Kulissenführung axial verfahrbar sind.

Zur Erzielung eines kompakten Aufbaus der Reifenfüllstation kann weiterhin vorgesehen sein, dass die wenigstens zwei ersten Einzelfüllglocken und/oder die wenigstens zwei zweiten Einzelfüllglocken in der Weise koaxial zueinander angeordnet sind, dass die Außenumfangsfläche der innenliegenden ersten und/oder zweiten Einzelfüllglocke an der Innenumfangsfläche der zu ihr außenliegenden ersten und/oder zweiten Einzelfüllglocke anliegt.

Um ein Austreten von Füllluft aus den Einzelfüllglocken, beispielsweise über die Kulissenführung zu vermeiden, hat es sich als vorteilhaft erwiesen, wenn die wenigstens zwei ersten Einzelfüllglocken und/oder die wenigstens zwei zweiten Einzelfüllglocken von einer zumindest teilweise abdichtenden Ummantelung umgeben sind.

Hinsichtlich des Verfahrens wird die vorstehende Aufgabe durch die Merkmale des Anspruchs 14 gelöst. In den sich daran anschließenden Ansprüchen 15 bis 22 finden sich vorteilhafte Ausgestaltungen des Verfahrens. Mit dem Verfahren lassen sich sämtliche vorstehend erläuterten Vorteile, die mit der erfindungsgemäßen Reifenfüllstation verbunden sind, ebenfalls erzielen.

Weitere vorteilhafte Ausgestaltungen sowie ein Ausführungsbeispiel der erfindungsgemäßen Reifenfüllstation und des erfindungsgemäßen Verfahrens werden nachstehend im Zusammenhang mit der beiliegenden Zeichnungsfigur erläutert. Die in Verbindung mit der Beschreibung des Ausführungsbeispiels verwendeten Begriffe "oben", "unten", "rechts" und "links" beziehen sich auf die Ausrichtung der Zeichnungsfigur in Betrachtungslage mit normal lesbaren Bezugszeichen. Hierbei ist:
- Fig. 1: ein schematischer Längsschnitt durch eine erfindungsgemäße Reifenfüllstation;
- Fig. 2: eine zu Fig. 1 ähnliche Ansicht einer zweiten Ausführungsform einer erfindungsgemäßen Reifenfüllstation;
- Fig. 3: eine vergrößerte Ansicht von unten auf obere Füllglocken des zweiten Ausführungsbeispiels; und
- Fig. 4: eine geschnittene, vergrößerte Darstellung der Einzelheit Y in Fig. 2.

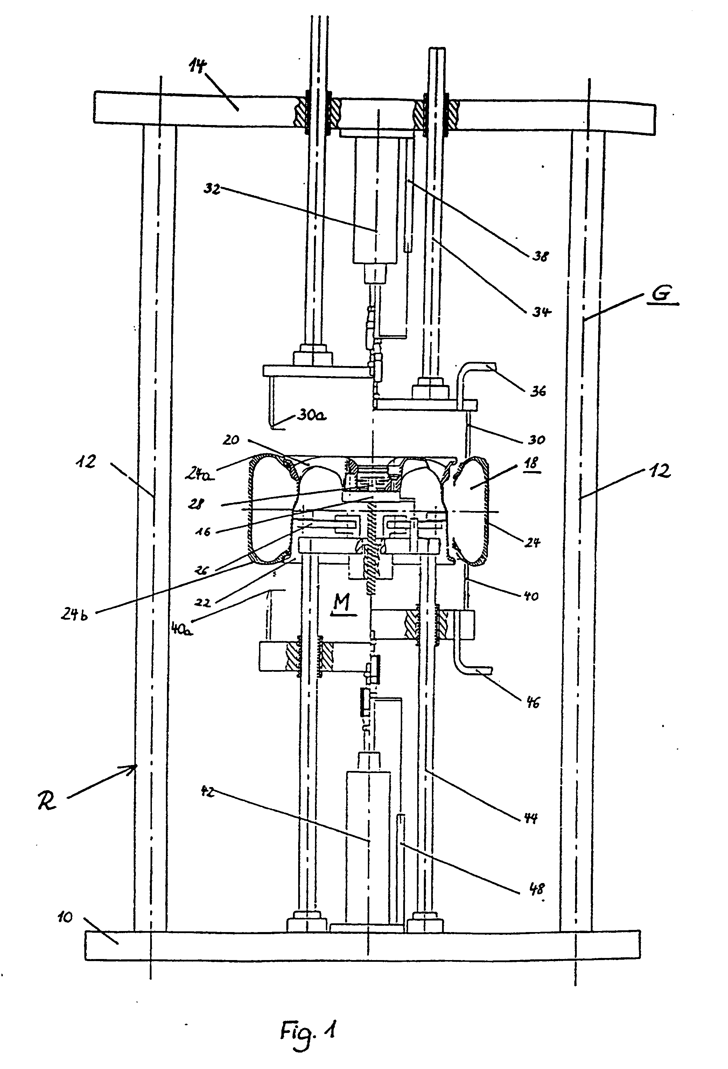

In der Figur 1 ist eine erfindungsgemäße Reifenfüllstation R in teilweise geschnittener Seitenansicht dargestellt. Die Reifenfüllstation R umfasst ein Maschinengestell G sowie die Mechanik M der Reifenfüllstation R. Das Gestell G besteht aus einer im wesentlichen horizontal ausgerichteten Fundamentplatte 10, einer geeigneten Zahl sich im wesentlichen vertikal erstreckender Ständersäulen 12 sowie wenigstens einer oberen, horizontal verlaufenden Traverse 14, die an den freien Enden der Ständersäulen 12 angebracht ist.

In dem durch das Gestell G definierten Innenraum ist in etwa in Raummitte eine vorzugsweise plane und im wesentlichen horizontal ausgerichtete Radauflage 16 angeordnet, auf der ein mit Druckluft zu füllendes Rad 18 aufgelegt ist, bei dem es sich um ein Motorrad-, Kfz- oder LKW-Rad handeln kann. Das Rad 18 besteht aus einer Radscheibe 20, einer mit der Radscheibe 20 ein Scheibenrad bildende Felge 22 und einem bereits auf die Felge 22 aufgezogenen Reifen 24. Wie aus der Figur 1 ersichtlich ist, liegt das Rad 18 mit seiner Nabe auf der Radauflage 16 plan in der Weise auf, dass die Radachse vertikal verläuft. Wie weiterhin aus der Figur 1 entnehmbar ist, besitzt die Radauflage 16 einen Durchmesser, der in etwa dem Durchmesser der Nabe entspricht.

Unterhalb der Radauflage 16 ist eine erste Zentriereinrichtung 26 vorgesehen, mittels der die Felge 22 erfasst und ausgerichtet wird. Die Ausrichtung erfolgt gegenüber einer nachstehend noch näher erläuterten, oberen und/oder unteren Füllglocke 30, 40. Die erste Zentriereinrichtung 26 kann in bekannter Weise aufgebaut sein, beispielsweise durch wenigstens zwei, vorzugsweise drei in einer horizontalen Ebene reversibel verschwenkbare Arme, an deren freien Enden jeweils eine das freie Ende des jeweiligen Armes überragende Rolle in der Weise angeordnet ist, dass die Rollenachse vertikal verläuft. Beim Aufsetzen des Rades 18 auf die Radauflage 16 befinden sich die Arme der ersten Zentriereinrichtung 26 in einer Außerbetriebsposition, in der sie so verschwenkt sind, dass sie nicht in Kontakt mit der Innenumfangsfläche der Felge 22 gelangen können. Nachdem das Rad 18 auf der Radauflage 16 durch geeignete, nicht weiter dargestellte Mittel aufgesetzt worden ist, verschwenken die Arme der ersten Zentriereinrichtung 26 in Richtung der Innenumfangsfläche der Felge 22 in eine Betriebsposition und zentrieren die Felge 22 und damit das Rad 18 auf der planen Radauflage 16.

Neben der bereits erwähnten ersten Zentriereinrichtung 26 kann noch eine weitere, zweite Zentriereinrichtung 28 vorgesehen sein, die oberhalb der ersten Zentriereinrichtung 26 in etwa koaxial zu dieser angeordnet ist und neben ihrer Zentrierfunktion auch eine Spannfunktion besitzen. Die zweite Zentrierund Spanneinrichtung 28 zentriert die Nabenbohrung der Felge 22, damit das Scheibenrad stabil auf der Radauflage 16 liegt. Hierzu können in einer im wesentlichen horizontalen Ebene reversibel ausfahrbare Arme bzw. Schieber vorgesehen sein, wie es schematisch in der beiliegenden Figur 1 gezeigt ist. Diese Schieber befinden sich bei nicht auf der Radauflage 16 aufgesetztem Rad 18 in einer Außerbetriebsposition, in der sie in der Weise zurückgezogen sind, dass sie beim Auflegen des Rades 18 auf die Radauflage 16 nicht in Kontakt mit der Innenumfangsfläche. der Nabe kommen. Ist das Rad 18 auf der Radauflage 16 durch die bereits erwähnten, geeigneten Mittel aufgesetzt, können die Schieber der zweiten Zentrier- und Spanneinrichtung 28 aus dieser Außerbetriebsstellung in eine Zentrierstellung horizontal ausgefahren werden, wie es durch die Pfeile in der Figur 1 dargestellt ist. Die Schieber gelangen dann in Kontakt mit der Innenumfangsfläche der Nabe und richten diese aus. Dieser Vorgang kann vor, mit oder nach dem Betätigen der ersten Zentriereinrichtung 26 erfolgen. Vorzugsweise erfolgt er mit oder kurz nach dem Zentriervorgang der ersten Zentriereinrichtung 26.

Die Mechanik M der erfindungsgemäßen Reifenfüllstation R besitzt weiterhin eine erste Füllglocke 30, die oberhalb der Radauflage 16 in dem Gestell G angeordnet ist und im wesentlichen vertikal mittels eines Pneumatikzylinders 32 verfahrbar ist. Der Pneumatikzylinder 32 ist in der Weise an der Traverse 14 angebracht, dass er sich an der Traverse 14 in etwa in deren Mitte abstützt und seine Kolbenstange vertikal nach unten reversibel ausfahrbar ist. Über geeignete, nicht weiter dargestellte Mittel ist der Pneumatikzylinder 32 mit einer ebenfalls nicht dargestellten Druckluftquelle verbunden.

Die erste Füllglocke 30 selbst weist die Form eines auf dem Kopf stehenden, kreisförmigen Topfes auf und ist in der Mitte ihres "Topfbodens" mit der Kolbenstange des Pneumatikzylinders 32 verbunden. Der "Topfrand" 30a der ersten Füllglocke 30 besitzt einen solchen Durchmesser, dass die Füllglocke 30 für verschiedene Reifengrößen einsetzbar ist, aber dabei immer in Kontakt mit einer Reifenflanke kommt. Die erste Füllglocke 30 ist über wenigsten zwei Führungsstangen 34, die an dem "Topfboden" der ersten Füllglocke 30 angebracht sind und die in der oberen Traverse 14 durch geeignete Linearführungslager geführt sind, mittels des Pneumatikzylinders 32 geführt verfahrbar. Darüber hinaus besitzt die erste Füllglocke 30 noch einen Druckluftanschluss 36, über den sie mit einer nicht weiter dargestellten Druckluftquelle verbunden ist, sowie eine Wegemesseinrichtung 38. Der Druckluftanschluss 36 mündet im Inneren der ersten Füllglocke 30, wie dies in der Figur 1 dargestellt ist.

Unterhalb der planen Radauflage 16 ist eine zweite Füllglocke 40 vorgesehen, die koaxial zu der ersten Füllglocke 30 angeordnet ist und ebenfalls über einen Pneumatikzylinder 42 sowie wenigstens zwei Führungsstangen 44 vertikal verfahrbar ist. Der Pneumatikzylinder 42, dessen Kolbenstange vertikal nach oben reversibel ausfahrbar und koaxial zu der Kolbenstange des ersten Pneumatikzylinders 32 angeordnet ist, und die Führungsstangen 44 sind an der Fundamentplatte 10 angebracht bzw. stützen sich dort ab.

Die zweite Füllglocke 40 besitzt den gleichen Aufbau und die gleichen Abmessungen wie die erste Füllglocke 30 mit dem Unterschied, dass der "Topf" nicht auf dem Kopf steht mit nach unten weisendem "Topfrand" 30a, sondern "normal" ausgerichtet ist mit nach oben weisendem "Topfrand" 40a. Wie aus der Figur 1 ersichtlich ist, sind die Führungsstangen 44 mit ihren unteren Enden starr mit der Fundamentplatte 10 verbunden, wogegen die anderen Enden der Führungsstangen 44 die erste Zentriereinrichtung 26 und über die erste Zentriereinrichtung 26 die Radauflage 16 tragen. Da die Führungsstangen 44 unbeweglich ausgeführt sind, ist die zweite Führungsglocke 40 mit geeigneten Linearführungslagern versehen, durch die sie entlang der Führungsstangen 44 mittels des Pneumatikzylinders 42 reversibel vertikal verfahren werden kann. Ebenso wie die erste Füllglocke 30 ist auch die zweite Füllglocke 40 mit einem Druckluftanschluss 46 und einer Wegemesseinrichtung 48 verbunden.

Es ist noch zu bemerken, dass die erste Zentriereinrichtung 26 und/oder die plane Radauflage 16 und/oder die zweite Zentrierund Spanneinrichtung 28 in ihrer vertikalen Höhenposition einstellbar ausgestaltet sein können. Weiterhin ist noch zu bemerken, dass erste und zweite Zentrier- und Spanneinrichtung 26, 28 koaxial zu den Füllglocken 30, 40 bzw. den Kolbenstangen der Pneumatikzylinder 32, 42 angeordnet sind.

Der Betrieb der erfindungsgemäßen Reifenfüllstation R ist wie folgt:
Zunächst wird das Rad 18, das von einer Reifenaufziehstation herantransportiert worden ist und gegebenenfalls eine Messeinrichtung für die Maultiefe der Felge 22 und/oder die Einpresstiefe des Scheibenrades durchlaufen hat, mittels einer automatischen, nicht weiter dargestellten Handhabungseinrichtung auf der planen Radauflage 16 aufgesetzt. Anschließend wird die Felge 22 mittels der ersten Zentriereinrichtung 26 und die Nabenbohrung der Felge 22 mittels der zweiten Zentrier- und Spanneinrichtung 28 gegenüber der planen Auflage 16 bzw. der ersten und zweiten Füllglocke 30, 40 zentriert und eingespannt. Anschließend fährt gleichzeitig oder hintereinander die erste Füllglocke 30 und die zweite Füllglocke 40 aus ihrer jeweils oberhalb und unterhalb des Rades 18 angeordneten Außerbetriebstellung nach unten bzw. nach oben.

Die "Topfränder" bzw. Außenkanten 30a, 40a der beiden Füllglocken 30, 40 gelangen nach einem entsprechenden Verfahrweg, der jeweils durch die Wegemesseinrichtung 38, 48 erfasst wird, in Kontakt mit der ersten bzw. zweiten Reifenflanke 24a bzw. 24b und drücken diese jeweils bei weiterem Verfahren von dem Felgenhorn in Richtung des Inneren der Felge 22 ab. Da die Außenkanten 30a, 40a der beiden Füllglocken 30, 40 dicht auf den Reifenflanken 24a, 24b aufsitzen, entsteht ein luftdichter Füllraum bestehend aus dem Inneren der ersten Füllglocke 30, dem Reifeninneren mit Felge und dem Inneren der zweiten Füllglocke 40. Über den Druckluftanschluss 36 bzw. 46 der ersten bzw. der zweiten Füllglocke 30, 40 wird Druckluft in das Innere des Reifens 24 geführt. Wird hierbei die erste Füllgₗₒcke 30 und gleichzeitig oder kurz danach die zweite Füllglocke 40 wieder in Richtung ihrer Außerbetriebstellung verfahren, gleiten die Reifenwülste der beiden Reifenflanken 24a, 24b gleichmäßig in ihren Sitz an dem jeweiligen Felgenhorn. Hierdurch wird ein optimaler Sitz dieser Reifenflanken erzielt.

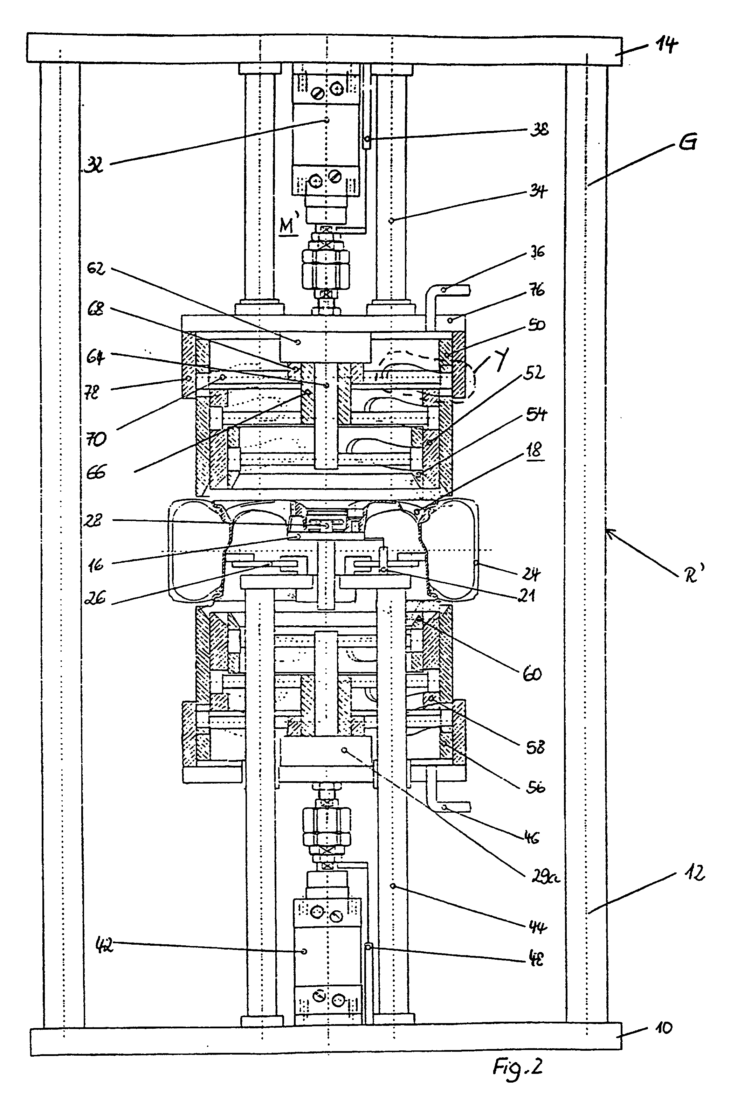

In der Figur 2 ist ein zweites Ausführungsbeispiel einer erfindungsgemäßen Reifenfüllstation R' gezeigt. Diese ist ähnlich zu der im Zusammenhang mit der Figur 1 erläuterten Reifenfüllstation R aufgebaut, so dass nachstehend lediglich auf die Unterschiede zu der in Figur 1 gezeigten Reifenfüllstation R eingegangen wird. In diesem Zusammenhang ist zu bemerken, das identische Bezugszeichen in den Figuren 1 und 2 identische Bauteile bezeichnen.

Die Reifenfüllstation R' unterscheidet sich in ihrer Mechanik M' insofern von der im Zusammenhang mit der in Figur 1 geschilderten Reifenfüllstation R, dass nicht eine erste, oberhalb des Rades 18 angeordnete Füllglocke 30 und eine zweite, unterhalb des zu füllenden Rades 18 angeordnete Füllglocke 40 vorgesehen sind, sondern dass anstelle der einen ersten und zweiten Füllglocke 30, 40, wie sie in Figur 1 gezeigt sind, jeweils drei konzentrisch zueinander angeordnete erste Füllglocken 50, 52, 54 bzw. Einzelfüllglocken und ebenfalls drei konzentrisch zueinander angeordnete zweite Füllglocken 56, 58, 60 bzw. Einzelfüllglocken vorgesehen sind. Da die zweiten Einzelfüllglocken 56, 58, 60 identisch zu den ersten Einzelfüllglocken 50, 52, 54 aufgebaut sind, wird nachstehend lediglich die Konstruktion und die Funktionsweise letzterer erläutert.

Wie aus Figur 2 zu entnehmen ist, sind die ersten Einzelfüllglocken 50, 52, 54 so aufeinander abgestimmt, dass der Außendurchmesser der am weitesten innen sitzenden, ersten Einzelfüllglocke 54 in etwa dem Innendurchmesser der mittleren, ersten Einzelfüllglocke 52 und deren Außendurchmesser in etwa dem Innendurchmesser der äußeren, ersten Einzelfüllglocke 50 entspricht. Die Passung zwischen den Innenumfangsflächen und Außenumfangsflächen der ersten Einzelfüllglocken 50, 52, 54 ist so gewählt, dass die jeweiligen ersten Einzelfüllglocken 50, 52, 54 entlang der sich berührenden Flächen verschoben werden können.

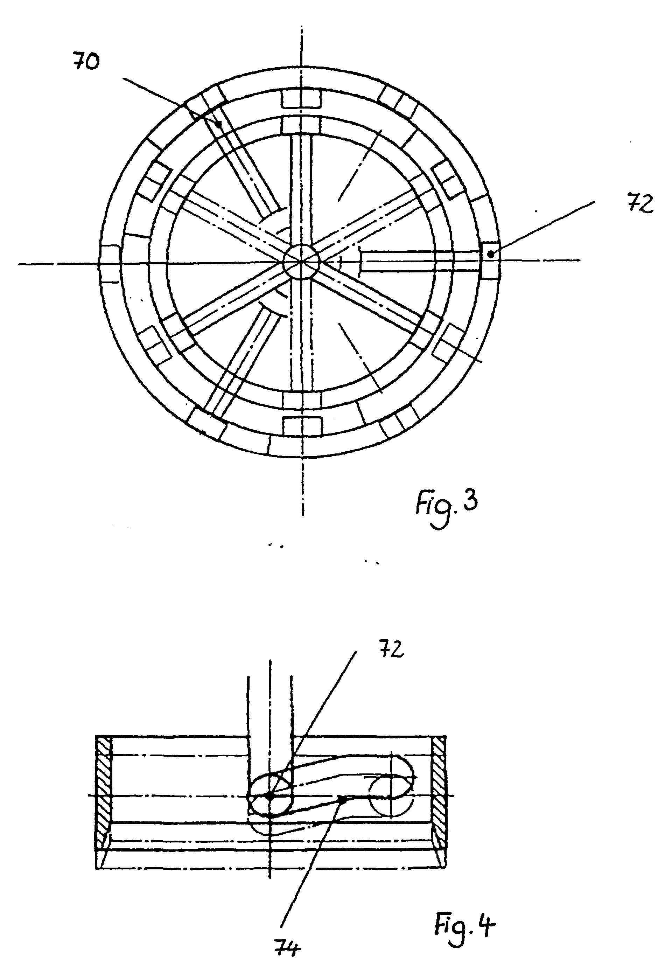

Die ersten Einzelfüllglocken 50, 52, 54 lassen sich getrennt voneinander ausfahren. Hierzu ist ein Dreh-Getriebe 62 vorgesehen, welches die jeweilige Einzelfüllglocke 50, 52, 54 in Uhrzeiger- und Gegenuhrzeigerrichtung drehen kann. Hierzu ist für die innenliegende, erste Einzelfüllglocke 54 eine Welle 64, für die mittlere, erste Einzelfüllglocke 52 eine auf der Welle 64 sitzende Hülse 66 und für die außenliegende, erste Einzelfüllglocke 50 eine konzentrisch zu der Welle 64 und der ersten Hülse 66 angeordnete zweite Hülse 68 vorgesehen. Die Drehwelle 64, die erste Hülse 66 und die auf der Außenumfangsfläche der ersten Hülse 66 sitzende zweite Hülse 68 sind unabhängig voneinander verdrehbar und über Arme 70 jeweils mit der entsprechenden Einzelfüllglocke 50, 52, 54 verbunden, wie dies aus Figur 2 und 3 hervorgeht. Für jede erste Einzelfüllglocke 50, 52, 54 sind drei im Winkel von 120° zueinander angeordnete Arme 70 vorgesehen. Da die Wandstärke der beiden Hülsen 66, 68 in etwa der Wandstärke der ersten Einzelfüllglocken 50, 52, 54 entspricht, besitzen sämtliche Arme 70 die gleiche axiale Länge.

An dem nach außen weisenden Ende jedes Armes 70 ist eine Rolle 72 angebracht, die in einer entsprechenden, in der jeweiligen ersten Einzelfüllglocke 50, 52, 54 eingearbeiteten Führungsbahn 74 eingreift (vgl. Fig. 2-4). Die Führungsbahn 74 weist in der zweidimensionalen Ansicht die Form einer Rolltreppe auf und ist so gestaltet, dass eine ausgewählte erste Einzelfüllglocke 50, 52, 54 gegenüber den anderen beiden ersten Einzelfüllglocken 50, 52, 54 ausgefahren bzw. abgesenkt oder eingefahren bzw., angehoben werden kann. Hierdurch besteht die Möglichkeit, dass nach dem Absenken der ersten Einzelfüllglocken 50, 52, 54 mittels des Pneumatikzylinders 32 bis kurz vor der Reifenflanke des mit Luft zu füllenden Rades 18, wie es in Figur 2 dargestellt ist, die dem Reifendurchmesser entsprechende erste Einzelfüllglocke 50, 52, 54 weiter abgesenkt werden kann, wobei die anderen beiden ersten Einzelfüllglocken 50, 52, 54 ihre Position beibehalten. Das Absenken einer ersten Einzelfüllglocke 50, 52, 54 erfolgt dadurch, dass durch einen Motor, der beispielsweise ebenfalls Teil des Pneumatikzylinders 32 sein kann, dass Drehgetriebe 62 in Gang gesetzt wird und die ausgewählte erste Einzelfüllglocke 50, 52, 54 in Drehung versetzt wird, wobei die Rollen 72 in der Führungsbahn 74 verlaufen und hierdurch infolge der Form der Führungsbahn 74 die ausgewählte erste Einzelfüllglocke 50, 52, 54 abgesenkt bzw. angehoben wird und in Kontakt mit der Reifenflanke gelangt. Hierdurch wird dann der gleiche dichte Abschluss erreicht, der bei einer einzelnen ersten Einzelfüllglocke 30 gemäß dem ersten Ausführungsbeispiel erläutert worden ist.

Es ist noch zu bemerken, dass die drei ersten Einzelfüllglocken 50, 52, 54 an ihrem oberen Ende durch ein topfartiges Bauteil 76 übergriffen werden, welches einen Umfangsrand 78 sowie einen Boden aufweist, wobei die axiale Länge des Umfangsrandes 78 so gestaltet ist, dass die Führungsbahn 74 der außenliegenden ersten Einzelfüllglocke 50 überdeckt und damit abgedichtet ist, wie dies in Figur 2 erkennbar ist.

## Patentansprüche

1. Reifenfüllstation zum Füllen eines Rades mit Druckluft, enthaltend eine Radauflage (16) für das Rad (18), das aus einem Scheibenrad (20) und einem auf das Scheibenrad (20) aufgezogenen Reifen (24) besteht, eine erste Zentriereinrichtung (26) zum Ausrichten des Rades (18) und eine erste Füllglocke (30; 50, 52, 54), die in Achsrichtung des Rades (18) zum Abdrücken einer der beiden Reifenflanken (24a oder 24b) von dem Felgenhorn und zum Zuführen von Füllluft in das Reifeninnere reversibel verfahrbar ist,
**dadurch gekennzeichnet, dass** eine zweite Füllglocke (40; 56, 58, 60) zum Abdrücken der anderen Reifenflanke (24b oder 24a) zum Zuführen von Füllluft in das Reifeninnere vorgesehen ist und dass die erste sowie die zweite Füllglocke (30, 40; 50, 52, 54, 56, 58, 60) zum Abdrücken der Reifenflanken (24a, 24b) in Achsrichtung des Rades (18) aufeinander zu reversibel verfahrbar sind.

2. Reifenfüllstation nach Anspruch 1,
**dadurch gekennzeichnet, dass** die zweite Füllglocke (40; 56, 58, 60) ebenfalls zum Zuführen von Füllluft in das Reifeninnere in der Lage ist.

3. Reifenfüllstation nach Anspruch 1 oder 2,
**dadurch gekennzeichnet, dass** für die erste und/oder die zweite Füllglocke (30,40; 50, 52, 54, 56, 58, 60) wenigstens eine Messeinrichtung (38, 46) zum Erfassen des von der jeweiligen Füllglocke (30, 40; 50, 52, 54, 56, 58, 60) zurückgelegten Weges vorgesehen ist.

4. Reifenfüllstation nach einem der Ansprüche 1 bis 3,
**dadurch gekennzeichnet, dass** eine vorzugsweise programmierbare Steuereinrichtung zum Steuern zumindest der Verfahrbewegung der ersten und der zweiten Füllglocke (30, 40) vorgesehen ist.

5. Reifenfüllstation nach Anspruch 4,
**dadurch gekennzeichnet, dass** die Steuereinrichtung die ersten und/die zweite Füllglocke (30, 40; 50, 52, 54, 56, 58, 60) in Abhängigkeit der Radauflagenhöhe und der Einpresstiefe der Felge des zu befüllenden Rades (18) steuert.

6. Reifenfüllstation nach einem der Ansprüche 1 bis 5,
**dadurch gekennzeichnet, dass** eine zweite Zentriereinrichtung (28) zum Zentrieren der Felgenbohrung vorgesehen ist.

7. Reifenfüllstation nach einem der Ansprüche 1 bis 6,
**dadurch gekennzeichnet, dass** in Zuführrichtung des Rades (18) vor der Radauflage (16) eine Einrichtung zum Messen der Maultiefe und/oder der Einpresstiefe des Scheibenrades (18) vorgesehen ist.

8. Reifenfüllstation nach einem der Ansprüche 1 bis 7,
**dadurch gekennzeichnet, dass** die beiden Füllglocken (30, 40) mittels pneumatische oder hydraulische Betätigungszylinder (32, 42) verfahrbar sind.

9. Reifenfüllstation nach einem der Ansprüche 1 bis 8,
**dadurch gekennzeichnet, dass** die erste Füllglocke (30) und/oder die zweite Füllglocke (40) wenigstens zwei koaxial zueinander angeordnete, Einzelfüllglocken (50, 52, 54, 56, 58, 60) aufweisen.

10. Reifenfüllstation nach Anspruch 9,
**dadurch gekennzeichnet, dass** die wenigstens zwei ersten Einzelfüllglocken (50, 52, 54) und/oder die wenigstens zwei zweiten Einzelfüllglocken (56, 58, 60) getrennt voneinander axial reversibel verfahrbar sind.

11. Reifenfüllstation nach Anspruch 10,
**dadurch gekennzeichnet, dass** die wenigstens zwei ersten Einzelfüllglocken (50, 52, 54) und/oder die wenigstens zwei zweiten Einzelfüllglocken (56, 58, 60) mittels eines Drehgetriebes sowie einer Kulissenführung axial verfahrbar sind.

12. Reifenfüllstation nach einem der Ansprüche 8 bis 11,
**dadurch gekennzeichnet, dass** die wenigstens zwei ersten Einzelfüllglocken (50, 52, 54) und/oder die wenigstens zwei zweiten Einzelfüllglocken (56, 58, 60) in der Weise koaxial zueinander angeordnet sind, dass die Außenumfangsfläche der innenliegenden ersten und/oder zweiten Einzelfüllglocke (54, 60) an der Innenumfangsfläche der zu ihr außenliegenden ersten und/oder zweiten Einzelfüllglocke (52, 58) anliegen.

13. Reifenfüllstation nach einem der Ansprüche 9 bis 12,
**dadurch gekennzeichnet, dass** die wenigstens zwei ersten Einzelfüllglocken und/oder die wenigstens zwei zweiten Einzelfüllglocken (50, 52, 54, 56, 58, 60) von einer zumindest teilweise abdichtenden Ummantelung (76, 78) umgeben sind.

14. Verfahren zum Füllen eines aus einem Scheibenrad und einem auf das Scheibenrad aufgezogenen Reifen bestehenden Rades mit Druckluft in einer Reifenfüllstation, insbesondere einer Reifenfüllstation nach einem der Ansprüche 1 bis 13, bei dem das Rad auf einer Radauflage in der Reifenfüllstation abgelegt sowie ausgerichtet wird und bei dem eine erste Füllglocke auf einer Reifenflanke aufgesetzt wird, um diese Reifenflanke von dem Felgenhorn abzudrücken und die Füllluft in das Reifeninnere strömen zu lassen,
**dadurch gekennzeichnet, dass** auf die andere Reifenflanke eine zweite Füllglocke aufgesetzt wird, um diese Reifenflanke ebenfalls von dem Felgenhorn abzudrücken und dass
die beiden Füllglocken entlang der Radachse zum Aufsetzen auf die Reifenflanke reversibel aufeinander zu verfahren werden.

15. Verfahren nach Anspruch 14,
**dadurch gekennzeichnet, dass** die zweite Füllglocke ebenfalls Füllluft in das Reifeninnere strömen lässt.

16. Verfahren nach Anspruch 14 oder 15,
**dadurch gekennzeichnet, dass** der zurückgelegte Weg der ersten und/oder zweiten Füllglocke mittels Messeinrichtungen erfasst und die so gewonnenen Messwerte an eine Steuereinrichtung übertragen werden.

17. Verfahren nach einem der Ansprüche 14 bis 16,
**dadurch gekennzeichnet, dass** das Rad über seine Felgenbohrung zentriert wird.

18. Verfahren nach einem Ansprüche 14 bis 17,
**dadurch gekennzeichnet, dass** vor dem Zuführen des Rades zu der Reifenfüllstation die Maultiefe und/oder die Einpresstiefe des Scheibenrades gemessen wird.

19. Verfahren nach einem der Ansprüche 14 bis 18,
**dadurch gekennzeichnet, dass** die erste Füllglocke und/oder die zweite Füllglocke wenigstens zwei koaxial zueinander angeordnete Einzelfüllglocken aufweisen.

20. Verfahren nach Anspruch 19,
**dadurch gekennzeichnet, dass** die wenigstens zwei ersten Einzelfüllglocken und/oder die wenigstens zwei zweiten Einzelfüllglocken getrennt voneinander axial reversibel verfahren werden.

21. Verfahren nach Anspruch 20,
**dadurch gekennzeichnet, dass** die wenigstens zwei ersten Einzelfüllglocken und/oder die wenigstens zwei zweiten Einzelfüllglocken mittels eines Drehgetriebes sowie einer Kulissenführung axial verfahren werden.

22. Verfahren nach einem der Ansprüche 20 bis 21,
**dadurch gekennzeichnet, dass** die wenigstens zwei ersten Einzelfüllglocken und/oder die wenigstens zwei zweiten Einzelfüllglocken in der Weise koaxial zueinander angeordnet werden, dass die Außenumfangsfläche der innenliegenden ersten und/oder zweiten Einzelfüllglocke an der Innenumfangsfläche der zu ihr außenliegenden ersten und/oder zweiten Einzelfüllglocke anliegen.

## Claims

1. A tyre inflation station for inflating a wheel unit with compressed air, including a wheel support (16) for the wheel unit (18) which comprises a disc wheel (20) and a tyre (24) fitted on to the disc wheel (20), a first centering device (26) for aligning the wheel unit (18) and a first inflation bell (30; 50, 52, 54) which is reversibly displaceable in the axial direction of the wheel unit (18) for pressing one of the two tyre side walls (24a or 24b) off the rim flange and for feeding inflation air into the interior of the tyre, **characterised in that** there is provided a second inflation bell (40; 56, 58, 60) for pressing the other tyre side wall (24b or 24a) off for feeding inflation air into the interior of the tyre and that the first and the second inflation bells (30, 40; 50, 52, 54, 56, 58, 60) for pressing off the tyre side walls (24a, 24b) are reversibly displaceable towards each other in the axial direction of the wheel unit (18).

2. A tyre inflation station according to claim 1 **characterised in that** the second inflation bell (40; 56, 58, 60) is also capable of feeding inflation air into the interior of the tyre.

3. A tyre inflation station according to claim 1 or claim 2 **characterised in that** for the first and/or the second inflation bell (30, 40; 50, 52, 54, 56, 58, 60) there is provided at least one measuring device (38, 46) for detecting the distance covered by the respective inflation bell (30, 40; 50, 52, 54, 56, 58, 60).

4. A tyre inflation station according to one of claims 1 to 3 **characterised in that** there is provided a preferably programmable control device for controlling at least the travel movement of the first and second inflation bells (30, 40).

5. A tyre inflation station according to claim 4 **characterised in that** the control device controls the first and/or the second inflation bells (30, 40; 50, 52, 54, 56, 58, 60) in dependence on the wheel support height and the pressing depth of the rim of the wheel unit (18) to be inflated.

6. A tyre inflation station according to one of claims 1 to 5 **characterised in that** there is provided a second centering device (28) for centering the rim bore.

7. A tyre inflation station according to one of claims 1 to 6 **characterised in that** provided upstream of the wheel support (16) in the feed direction of the wheel unit (18) is a device for measuring the mouth depth and/or the pressing depth of the disc wheel (18).

8. A tyre inflation station according to one of claims 1 to 7 **characterised in that** the two inflation bells (30, 40) are displaceable by means of pneumatic or hydraulic actuating cylinders (32, 42).

9. A tyre inflation station according to one of claims 1 to 8 **characterised in that** the first inflation bell (30) and/or the second inflation bell (40) have at least two individual inflation bells (50, 52, 54, 56, 58, 60) arranged in mutually coaxial relationship.

10. A tyre inflation station according to claim 9 **characterised in that** the at least two first individual inflation bells (50, 52, 54) and/or the at least two second individual inflation bells (56, 58, 60) are axially reversibly displaceable separately from each other.

11. A tyre inflation station according to claim 10 **characterised in that** the at least two first individual inflation bells (50, 52, 54) and/or the at least two second individual inflation bells (56, 58, 60) are axially displaceable by means of a rotary transmission and a sliding guide means.

12. A tyre inflation station according to one of claims 8 to 11 **characterised in that** the at least two first individual inflation bells (50, 52, 54) and/or the at least two second individual inflation bells (56, 58, 60) are arranged in mutually coaxial relationship in such a way that the outside peripheral surface of the inwardly disposed first and/or second individual inflation bell (54, 60) bear against the inner peripheral surface of the first and/or second individual inflation bell (52, 58) which is disposed outwardly in relation thereto.

13. A tyre inflation station according to one of claims 9 to 12 **characterised in that** the at least two first individual inflation bells and/or the at least two second individual inflation bells (50, 52, 54, 56, 58, 60) are surrounded by an at least partially sealing enclosure (76, 78).

14. A method of inflating a wheel unit comprising a disc wheel and a tyre fitted on to the disc wheel with compressed air in a tyre inflation station, in particular a tyre inflation station according to one of claims 1 to 13, wherein the wheel is deposited on a wheel support in the tyre inflation station and aligned and wherein a first inflation bell is fitted on a tyre side wall in order to press said tyre side wall off the rim flange and to cause the inflation air to flow into the interior of the tyre,
**characterised in that** a second inflation bell is fitted on to the other tyre side wall in order also to press said tyre side wall off the rim flange and that the two inflation bells are displaced reversibly towards each other along the axis of the wheel unit for fitting on to the tyre side wall.

15. A method according to claim 14 **characterised in that** the second inflation bell also causes inflation air to flow into the interior of the tyre.

16. A method according to claim 14 or claim 15 **characterised in that** the distance covered by the first and/or inflation bell is detected by means of measuring devices and the measurement values obtained **in that** way are transmitted to a control device.

17. A method according to one of claims 14 to 16 **characterised in that** the wheel unit is centered by way of a rim bore.

18. A method according to one of claims 14 to 17 **characterised in that** prior to feeding the wheel unit to the tyre inflation station the mouth depth and/or the pressing depth of the disc wheel is measured.

19. A method according to one of claims 14 to 18 **characterised in that** the first inflation bell and/or the second inflation bell have at least two individual inflation bells arranged in mutually coaxial relationship.

20. A method according to claim 19 **characterised in that** the at least two first individual inflation bells and/or the at least two second individual inflation bells are axially reversibly displaced separately from each other.

21. A method according to claim 20 **characterised in that** the at least two first individual inflation bells and/or the at least two second individual inflation bells are axially displaced by means of a rotary transmission and a sliding guide means.

22. A method according to one of claims 20 to 21 **characterised in that** the at least two first individual inflation bells and/or the at least two second individual inflation bells are arranged in mutually coaxial relationship in such a way that the outside peripheral surface of the inwardly disposed first and/or second individual inflation bell bear against the inner peripheral surface of the first and/or second individual inflation bell which is disposed outwardly in relation thereto.

## Revendications

1. Poste de gonflage de pneumatiques pour gonfler une roue par de l'air comprimé, comportant un support (16) pour la roue (18), laquelle est constituée d'une roue (20) à centre plein et d'un pneumatique (24) mis sur la roue (20) à centre plein, un premier dispositif (26) de centrage pour orienter la roue (18) et une première cloche (30; 50, 52, 54) de gonflage, qui peut être déplacée de manière réversible dans la direction de l'axe de la roue (18) pour déjanter l'un des deux flancs (24a ou 24b) du pneumatique du rebord de jante et pour faire entrer de l'air comprimé à l'intérieur du pneumatique, **caractérisé en ce qu'**il est prévu une deuxième cloche (40; 56, 58, 60) de gonflage pour déjanter l'autre flanc (24b ou 24a) du pneumatique pour faire entrer de l'air comprimé à l'intérieur du pneumatique et **en ce que** la première ainsi que la deuxième cloche (30; 40, 50, 52, 54, 56, 58, 60) de gonflage peuvent être déplacées de manière réversible l'une par rapport à l'autre dans la direction de l'axe de la roue (18) pour déjanter les flancs (24a, 24b) du pneumatique.

2. Poste de gonflage de pneumatiques suivant la revendication 1,
**caractérisé en ce que** la deuxième cloche (40; 56, 58, 60) de gonflage est également en mesure de faire entrer de l'air comprimé à l'intérieur du pneumatique.

3. Poste de gonflage de pneumatiques suivant la revendication 1 ou 2,
**caractérisé en ce qu'**il est prévu, pour la première et/ou pour la deuxième cloche (30, 40; 50, 54, 56, 58, 60) de gonflage, au moins un dispositif (38, 46) de mesure destiné à relever le trajet parcouru par la cloche (30, 40; 50, 52, 54, 56, 58, 60) respective de gonflage.

4. Poste de gonflage de pneumatiques suivant l'une des revendications 1 à 3,
**caractérisé en ce qu'**il est prévu un dispositif, de préférence programmable, de réglage au moins du mouvement de déplacement de la première et de la deuxième cloche (30, 40) de gonflage.

5. Poste de gonflage de pneumatiques suivant la revendication 4,
**caractérisé en ce que** le dispositif de réglage règle la première et la deuxième cloche (30, 40; 50, 52, 54, 56, 58, 60) de gonflage en fonction du niveau du support de la roue (18) et de la profondeur d'enfoncement de la jante de la roue (18) à gonfler.

6. Poste de gonflage de pneumatiques suivant l'une des revendications 1 à 5,
**caractérisé en ce qu'**il est prévu un deuxième dispositif (28) de centrage du trou de la jante.

7. Poste de gonflage de pneumatiques suivant l'une des revendications 1 à 6,
**caractérisé en ce qu'**il est prévu en amont, considéré dans le sens d'amenée de la roue (18), du support (16) de la roue un dispositif de mesure de la profondeur de la jante ou de la profondeur d'enfoncement de la roue (18) à centre plein.

8. Poste de gonflage de pneumatiques suivant l'une des revendications 1 à 7,
**caractérisé en ce que** les deux cloches (30, 40) de gonflage peuvent être déplacées au moyen de vérins (32, 42) d'actionnement pneumatiques ou hydrauliques.

9. Poste de gonflage de pneumatiques suivant l'une des revendications 1 à 8, **caractérisé en ce que** la première cloche (30) de gonflage et/ou la deuxième cloche (40) de gonflage ont au moins deux cloches (50, 52, 54, 56, 58, 60) individuelles de gonflage disposées coaxialement l'une par rapport à l'autre.

10. Poste de gonflage de pneumatiques suivant la revendication 9,
**caractérisé en ce que** les au moins deux premières cloches (50, 52, 54) individuelles de gonflage et/ou les au moins deux deuxièmes cloches (56, 58, 60) individuelles de gonflage peuvent être déplacées de manière réversible axialement séparément l'une de l'autre.

11. Poste de gonflage de pneumatiques suivant la revendication 10,
**caractérisé en ce que** les au moins deux premières cloches (50, 52, 54) individuelles de gonflage et/ou les au moins deuxièmes cloches (56, 58, 60) individuelles de gonflage peuvent être déplacées axialement au moyen d'un dispositif d'entraînement en rotation, ainsi que d'un guidage par coulisse.

12. Poste de gonflage de pneumatiques suivant l'une des revendications 8 à 11,
**caractérisé en ce que** les au moins deux premières cloches (50, 52, 54) individuelles de gonflage et/ou les au moins deuxièmes cloches (56, 58, 60) individuelles de gonflage sont disposées coaxialement l'une par rapport à l'autre de façon à ce que la surface de pourtour extérieur des premières et/ou deuxièmes cloches (54, 60) individuelles de gonflage à l'intérieur s'appliquent à la surface de pourtour intérieur de la première et/ou de la deuxième cloche (52, 58) individuelles de gonflage se trouvant à l'extérieur par rapport à elle.

13. Poste de gonflage de pneumatiques suivant l'une des revendications 9 à 12,
**caractérisé en ce que** les au moins deux premières cloches individuelles de gonflage et/ou les au moins deux deuxièmes cloches (50, 52, 54, 56, 58, 60) individuelles de gonflage sont entourées d'une enveloppe (76, 78) étanche au moins en partie.

14. Procédé de gonflage par de l'air comprimé dans un poste de gonflage de pneumatiques, notamment dans un poste de gonflage de pneumatiques suivant l'une des revendications 1 à 13, d'une roue constituée d'une roue à centre plein et d'un pneumatique mis sur la roue à centre plein, dans lequel on dépose la roue sur un support de roue du poste de gonflage de pneumatique et on l'oriente et dans lequel, on applique une première cloche de gonflage sur un flanc du pneumatique pour déjanter ce flanc de pneumatique du rebord de jante et on fait entrer de l'air comprimé à l'intérieur du pneumatique, **caractérisé en ce que** l'on applique une deuxième cloche de remplissage sur l'autre flanc du pneumatique pour déjanter ce flanc de pneumatique également du rebord de jante et **en ce que** l'on déplace l'une par rapport à l'autre de manière réversible les deux cloches de remplissage le long de l'axe de la roue pour les appliquer sur les flancs du pneumatique.

15. Procédé de gonflage de pneumatiques suivant la revendication 14,
**caractérisé en ce que** la deuxième cloche de gonflage fait entrer également de l'air comprimé à l'intérieur du pneumatique.

16. Procédé de gonflage de pneumatiques suivant la revendication 14 ou 15,
**caractérisé en ce que** l'on relève le trajet parcouru par la première et/ou la deuxième cloche de gonflage au moyen de dispositifs de mesure et l'on transmet les valeurs de mesure ainsi obtenues à un dispositif de réglage.

17. Procédé de gonflage de pneumatiques suivant l'une des revendications 14 à 16,
**caractérisé en ce que** l'on centre la roue par son trou de jante.

18. Procédé de gonflage de pneumatiques suivant l'une des revendications 14 à 17,
**caractérisé en ce qu'**avant d'envoyer la roue au poste de gonflage de pneumatiques, on mesure la profondeur de la jante et/ou la profondeur d'enfoncement de la roue à centre plein.

19. Procédé de gonflage de pneumatiques suivant l'une des revendications 14 à 18,
**caractérisé en ce que** la première cloche de gonflage et/ou la deuxième cloche de gonflage ont au moins deux cloches individuelles de gonflage disposées coaxialement l'une à l'autre.

20. Procédé de gonflage de pneumatiques suivant la revendication 19,
**caractérisé en ce que** les au moins deux premières cloches individuelles de gonflage et/ou les au moins deux deuxièmes cloches individuelles de gonflage peuvent être déplacées de manière réversible axialement séparément l'une de l'autre.

21. Procédé de gonflage de pneumatiques suivant la revendication 20,
**caractérisé en ce que** les au moins deux premières cloches individuelles de gonflage et/ou les au moins deuxièmes cloches individuelles de gonflage peuvent être déplacées axialement au moyen d'un dispositif d'entraînement en rotation ainsi que d'un guidage par coulisse.

22. Procédé de gonflage de pneumatiques suivant l'une des revendications 20 à 21,
**caractérisé en ce que** les au moins deux premières cloches individuelles de gonflage et/ou les au moins deuxièmes cloches individuelles de gonflage sont disposées coaxialement l'une par rapport à l'autre de façon à ce que la surface de pourtour extérieur des premières et/ou deuxièmes cloches individuelles de gonflage à l'intérieur s'appliquent à la surface de pourtour intérieur de la première et/ou de la deuxième cloche individuelles de gonflage se trouvant à l'extérieur par rapport à elle.
